(19)

**Europäisches Patentamt**
**European Patent Office**
**Office européen des brevets**

(11) **EP 4 561 005 A1**

(12) **EUROPEAN PATENT APPLICATION**

(43) Date of publication:
**28.05.2025 Bulletin 2025/22**

(21) Application number: **24212367.7**

(22) Date of filing: **12.11.2024**

(51) International Patent Classification (IPC):
*H04L 41/16* (2022.01)    *H04L 43/04* (2022.01)
*G06N 3/02* (2006.01)    *G06N 20/00* (2019.01)

(52) Cooperative Patent Classification (CPC):
**H04L 43/04; G06N 3/02; G06N 20/00; H04L 41/16**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.11.2023 FI 20236309**

(71) Applicant: **Nokia Solutions and Networks Oy
02610 Espoo (FI)**

(72) Inventors:
- **VAN DAMME, Axel
  Loyers (BE)**
- **DUPUIS, Nicolas
  Chaudfontaine (BE)**
- **DIERICKX, Philippe
  Saint-Gery (BE)**
- **DELABY, Olivier
  Loyers (BE)**

(74) Representative: **Nokia EPO representatives
Nokia Technologies Oy
Karakaari 7
02610 Espoo (FI)**

(54) **UPSAMPLING OF NETWORK TRAFFIC TRACES**

(57)    A method for generating a temporal sequence of output values at an output rate equal to the input rate multiplied by an upsampling factor K from a first temporal sequence of input values of a traffic-related counter at the input rate is disclosed. The input values are in a first range. The temporal sequence of input values is preprocessed to generate a sequence of scaled values the output rate. The scaled values are in a second range derived from the first range by a non-linear function. A trained iterative denoising process is applied to the sequence of scaled values and a noise signal at the output rate to generate a sequence of denoised upsampled values at the output rate in the second range. The noise signal has values in the second range. The sequence of denoised upsampled values is post-processed to generate a temporal sequence of output values in the first range at the output rate. Each input value in the temporal sequence of input values is equal to a sum of K corresponding successive output values.

FIG. 2

**Description**

TECHNICAL FIELD

Various example embodiments relate generally to a method and apparatus for upsampling network traffic traces.

BACKGROUND

Network interfaces (WAN interface, Gateways, ONT, OLT, etc) may provide traffic-related counters over a period of time. Each traffic-related counter may represent a count of a traffic-related parameter measured at one or more points in a data network such as: a number of bytes (or a volume of bytes), a number of connections, a number of packets, a number of requests, a number of operations, etc.

Each counter value represents an aggregated volume (of bytes, connections, packets, requests, operations, etc) measured over the period of time, leading to an averaged traffic information. Depending on the network interface, that information may be available at a given granularity, i.e. at a given temporal rate, for instance every 5 minutes.

As those data could be the only practical source of usage-related information available from network equipment's, because of their privacy-preserving characters, because they do not require extra software nor high computing power resources, etc, network management/troubleshooting/optimization software usually rely on these data.

Indeed, transient high bandwidth demand could lead to transient issues, hence being able to detect such high demand would be a plus for optimizing the quality of service delivered between users of a shared-medium, for instance. However, with 5 minutes granularity traffic traces, such transient events are usually aggregated-out, preventing their detection and, by contrast, even generating false positives.

It may be useful to obtain traffic-related counters at a much finer granularity.

SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a method comprises: obtaining a first temporal sequence of input values of a traffic-related counter at an input rate, wherein the input values are in a first range; preprocessing the first temporal sequence of input values to generate a first sequence of scaled values at an output rate equal to the input rate multiplied by an upsampling factor K, wherein the scaled values are in a second range derived from the first range by a non-linear function; applying a trained iterative denoising process to the first sequence of scaled values stacked with a first noise signal at the output rate to generate a first sequence of denoised upsampled values at the output rate in the second range, wherein the first noise signal has values in the second range; postprocessing of the first sequence of denoised upsampled values to generate a first temporal sequence of output values in the first range at the output rate, wherein each input value in the first temporal sequence of input values is equal to a sum of K corresponding successive output values.

Preprocessing the first temporal sequence of input values may comprise: upsampling the first temporal sequence of input values by generating, from each of the input values, K upsampled values to generate a first sequence of upsampled values such that the sum of the K upsampled values is equal to the considered input value; applying a scaling function to each of the upsampled values to generate the first sequence of scaled values in the second range.

Generating the K upsampled values may comprise: replacing each of the input values by K equal upsampled values, each computed by dividing the considered input value by K.

The trained iterative denoising process may be based on a denoising diffusion probabilistic model.

The first sequence of scaled values may be used as conditioning signal for the trained iterative denoising process.

The trained iterative denoising process may use a U-net model iteratively executed.

The method may comprise: training the iterative denoising process by: obtaining a temporal sequence of input training values of the traffic-related counter at the second rate, wherein the input training values are in the first range; obtaining a sequence of aggregated training values at the first rate in the first range, the aggregated training values corresponding to an aggregated version of the input training values; scaling the input training values to generate a first sequence of scaled training values in the second range at the second rate; preprocessing the sequence of aggregated training values to generate a second sequence of scaled training values in the second range at the second rate; adding a noise signal in the second range to the first sequence of scaled training values to generate a sequence of noisy training values; applying one iteration of the iterative denoising process to the sequence of noisy training values using the first sequence of scaled training values as target signal and the second sequence of scaled training values as conditioning signal to generate a sequence of output denoised values; adapting one or more parameters of the iterative denoising process based on a loss function that evaluate a remaining noise in the sequence of output denoised values.

Postprocessing of the first sequence of denoised upsampled values may comprise: scaling the first sequence of denoised upsampled values to generate a first sequence of scaled upsampled values in the first range; generating the first temporal sequence of output values by adjusting values in the first sequence of scaled upsampled values such that each input value in the first temporal sequence of input values is equal to a sum of K corresponding successive output values.

Adjusting values in the first sequence of scaled upsampled values may comprise: applying a linear scaling factor to values in the first sequence of scaled upsampled values, wherein the linear scaling factor is computed based on the input value and the sum of K corresponding successive output values.

The method may comprise: discarding the first P values and the last Q values from the first temporal sequence of output values or signaling that the first P values and the last Q values from the first temporal sequence of output values are less reliable.

The method may comprise: obtaining a second input temporal sequence of input values of the traffic-related counter at the input rate in the second range, wherein each of the first and second sequences concerns traffic via a respective communication channel over a same physical or logical transmission link; preprocessing the second temporal sequence of input values to generate a second sequence of scaled values at the output rate, wherein the scaled values of the second sequence of scaled values are in the second range; applying a trained iterative denoising process to the second sequence of scaled values and a second noise signal at the output rate to generate a second sequence of denoised upsampled values at the output rate in the second range, wherein the second noise signal has values in the second range, wherein the trained iterative denoising process is applied jointly to the first sequence of scaled values, the first noise signal, the second sequence of scaled values and the second noise signal; postprocessing of the second sequence of denoised upsampled values to generate a second temporal sequence of output values in the first range at the output rate, wherein each input value in the second temporal sequence of input values is equal to a sum of K corresponding successive output values in the second temporal sequence of output values.

The method may comprise: performing an operation on one or more network devices or network function based on one or more output values of the first temporal sequence of output values.

According to another aspect, an apparatus comprises means for: obtaining a first temporal sequence of input values of a traffic-related counter at an input rate, wherein the input values are in a first range; preprocessing the first temporal sequence of input values to generate a first sequence of scaled values at an output rate equal to the input rate multiplied by an upsampling factor K, wherein the scaled values are in a second range derived from the first range by a non-linear function; applying a trained iterative denoising process to the first sequence of scaled values stacked with a first noise signal at the output rate to generate a first sequence of denoised upsampled values at the output rate in the second range, wherein the first noise signal has values in the second range; postprocessing of the first sequence of denoised upsampled values to generate a first temporal sequence of output values in the first range at the output rate, wherein each input value in the first temporal sequence of input values is equal to a sum of K corresponding successive output values.

The apparatus may comprise means for performing one or more or all steps of the method according to the first aspect. The means may include at least one processor and at least one memory storing instructions that, when executed by the at least one processor, cause the apparatus to perform one or more or all steps of a method according to the first aspect. The means may include circuitry (e.g. processing circuitry) to perform one or more or all steps of a method according to the first aspect.

According to another aspect, an apparatus comprises at least one processor and at least one memory storing instructions that, when executed by the at least one processor, cause the apparatus to perform: obtaining a first temporal sequence of input values of a traffic-related counter at an input rate, wherein the input values are in a first range; preprocessing the first temporal sequence of input values to generate a first sequence of scaled values at an output rate equal to the input rate multiplied by an upsampling factor K, wherein the scaled values are in a second range derived from the first range by a non-linear function; applying a trained iterative denoising process to the first sequence of scaled values and a first noise signal at the output rate to generate a first sequence of denoised upsampled values at the output rate in the second range, wherein the first noise signal has values in the second range; postprocessing of the first sequence of denoised upsampled values to generate a first temporal sequence of output values in the first range at the output rate, wherein each input value in the first temporal sequence of input values is equal to a sum of K corresponding successive output values.

The instructions, when executed by the at least one processor, may cause the apparatus to perform one or more or all steps of a method according to the first aspect.

According to another aspect, a computer program comprises instructions that, when executed by an apparatus, cause the apparatus to perform: obtaining a first temporal sequence of input values of a traffic-related counter at an input rate, wherein the input values are in a first range; preprocessing the first temporal sequence of input values to generate a first sequence of scaled values at an output rate equal to the input rate multiplied by an upsampling factor K, wherein the scaled values are in a second range derived from the first range by a non-linear function; applying a trained iterative denoising process to the first sequence of scaled values and a first noise signal at the output rate to generate a first sequence of denoised upsampled values at the output rate in the second range, wherein the first noise signal has values in the second range; postprocessing of the first sequence of denoised upsampled values to generate a first temporal sequence of output values in the first range at the output rate, wherein each input value in the first temporal sequence of input values is equal to a sum of K corresponding successive output values.

The instructions may cause the apparatus to perform one or more or all steps of a method according to the first aspect.

According to another aspect, a non-transitory computer readable medium comprises program instructions stored thereon for causing an apparatus to perform at least the following: obtaining a first temporal sequence of input values of a traffic-related counter at an input rate, wherein the input values are in a first range; preprocessing the first temporal sequence of input values to generate a first sequence of scaled values at an output rate equal to the input rate multiplied by an upsampling factor K, wherein the scaled values are in a second range derived from the first range by a non-linear function; applying a trained iterative denoising process to the first sequence of scaled values and a first noise signal at the output rate to generate a first sequence of denoised upsampled values at the output rate in the second range, wherein the first noise signal has values in the second range; postprocessing of the first sequence of denoised upsampled values to generate a first temporal sequence of output values in the first range at the output rate, wherein each input value in the first temporal sequence of input values is equal to a sum of K corresponding successive output values.

The program instructions may cause the apparatus to perform one or more or all steps of a method according to the first aspect.

BRIEF DESCRIPTION OF THE DRAWINGS

Example embodiments will become more fully understood from the detailed description given herein below and the accompanying drawings, which are given by way of illustration only and thus are not limiting of this disclosure.

FIG. 1 shows an input network traffic trace and an upsampled version of the input network traffic trace obtained by an upsampling method disclosed herein according to an example.

FIG. 2 is a schematic diagram of an upsampling system at inference stage according to an example.

FIG. 3 illustrates a behaviour of a compensation function applied by an upsampling method according to an example.

FIG. 4 shows aspects of an upsampling method according to an example.

FIG. 5 is a schematic diagram of an upsampling system at inference stage for upsampling two or more traffic traces according to an example.

FIGS. 6A-6B show curves representing input sequences according to an example.

FIGS. 7A-7B show curves representing conditioning signals according to an example.

FIGS. 8A-8B show curves representing output upsampled signals according to an example.

FIG. 9 illustrate the behaviour of a Markov chain according to an example.

FIG. 10 shows a noising schedule $\overline{\alpha}_t$ according to an example.

FIG. 11 illustrates aspects of a resampling process according to an example.

FIG. 12 shows a high level view of a U-Net model architecture according to an example.

FIG. 13 is a schematic diagram of an upsampling system at training stage according to an example.

FIG. 14 shows upsampled traffic counters according to an example.

FIG. 15 shows upsampled traffic counters according to an example.

FIG. 16 is a flowchart illustrating a method for upsampling network traffic traces according to an example.

FIG. 17 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

DETAILED DESCRIPTION

Detailed example embodiments are disclosed herein. However, specific structural and/or functional details disclosed herein are merely representative for purposes of describing example embodiments and providing a clear understanding of the underlying principles. However these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

A method, that only needs aggregated traffic-related data as input, artificially - using a ML-based approach - augments and enriches the input low rate (aggregated) traffic-related data in order to create traffic-related data that would have been obtained at a much higher rate.

Machine Learning (ML) is an application that provides computer systems the ability to perform tasks, without explicitly being programmed, by making inferences based on patterns found in the analysis of data. Machine learning explores the study and construction of algorithms, also referred to herein as tools, that may learn from existing data and make predictions about new data. Such machine-learning algorithms operate by building an ML model from example training data in order to generate data-driven predictions as outputs.

An intelligent upsampling system is disclose that leverages ML based on a Denoising Diffusion Probabilistic Model and process with a network domain-specific training.

The Denoising Diffusion Probabilistic Model is trained such that the upsampling system is adapted to upsample aggregated traffic counters from one rate to another higher rate. The Denoising Diffusion Probabilistic Model embeds, through a specific training strategy, specific network domain knowledge and, therefore, is able to upsample, in an accurate, reliable and realistic way, low rate traffic-related data to generate higher rate traffic-related data.

Major breakthrough resides on the ability to offer such capability with privacy-preserving data (i.e. not requiring per-service data, per-device data, per-application data, etc), without the need of packet inspections and without retrieving more data, thereby offering a much better visibility on transient events and enabling much better sub-sequent processing and decisions. This provides a solution to data production and / or data collection constraints.

Other advantages include the ability to work in real-time mode (causal) or in a non-causal mode (dealing with "future" data), the capacity to work whatever the granularity of the input data. The method is compatible with any type of network (optical network, radio network, etc) and is not linked to a specific network type or transmission link (Passive Optical Network, Radio network, copper link, etc), any communication technology or any communication protocol.

The method provides output higher-granularity traffic-related values suitable for any sub-sequent decision-making process, for instance for targeted troubleshooting or network optimization, network configuration, etc. Accurate service-types identification and quantification may for example be performed, without the privacy and scalability issues of DPI.

The method constraints the output higher-granularity traffic-related values such that once aggregated back, they match exactly the input lower-granularity counter traffic-related values.

The method applies preprocessing of the input values concerning their range and dynamics so as to leverage the performances of the ML model.

In one or more embodiments, traffic-related input data from different channel (e.g. upstream and downstream channels, optical channels) may be jointly processed (e.g. using powerful tensors) by the Denoising Diffusion Probabilistic Model with the effect of providing consolidated insight to the model as well as limiting the discrepancies between the different outputs.

The hyperparameter space may be simplified to explore thanks to domain-driven choices in order to find the best model configuration within a minimal amount of resource involved.

The upsampling method is flexible since there are no constraints on the upsampling factor and / or the granularity of the input data.

Even if no technical constraint exists on the length of the input data sequence, the upsampling method can predict accurate upsampled data sequences from short input data sequences, e.g. as low as 24 counter values as input data sequence.

Using the upsampling method disclosed herein, sequences of 40 counters aggregating traffic data over 240 seconds periods may be upsampled by a factor 8 such that sequences of 320 counters of aggregating traffic data over 30 seconds periods are generated.

According to another example, sequences of 24 counters aggregating traffic data over 300 seconds periods are upsampled by a factor 10 such that sequences of 240 counters of aggregating traffic data over 30 seconds periods are generated.

Those examples are not exhaustive and many more combinations of input granularities, sequence lengths and upsampling factors can be handled by the upsampling method disclosed herein.

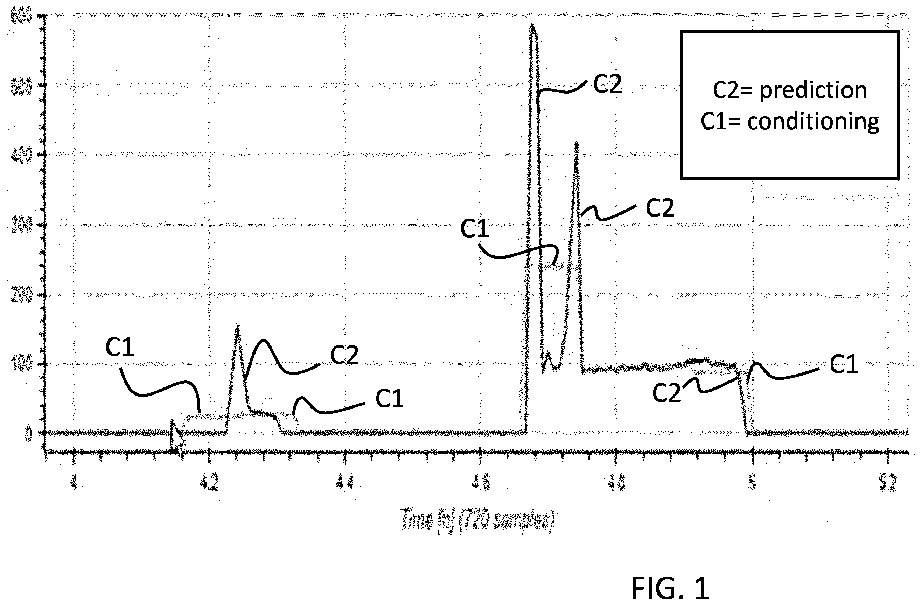

FIG. 1 shows high-granularity traffic data (curve C2) compared to a corresponding lower-granularity/aggregated traffic data (curve C1).

Classical simple interpolative/upsampling techniques or generic ML models would not be able to produce the curve C2 from the curve C1. The upsampling method disclosed herein allows generating values corresponding to the curve C2 with the help of the curve C1 (e.g. the curve C1 being use as a conditioning signal). This enables practical subsequent operations based on the curve C1, a decision-making process, troubleshooting analysis, configuration tasks, optimization tasks.

The upsampling system discloses herein relies on a supervised Deep Learning model that performs denoising. The training of such a model requires training data including a massive amount of first input data ("fine grained" data) at a high rate. The training set may include second input data ("coarse grained" data) at lower target rate(s). The second input data at a lower rate may be obtained by aggregating the first input data at the high rate by an aggregation factor that corresponds to the ratio between the high rate and the low rate. The aggregation factor is equal to the upsampling factor applied by the upsampling system.

As the upsampling method is flexible and can handle input data with various upsampling factors, having at disposal a training dataset including first input data with really fine granularity allow to train the denoising model for these various upsampling factors.

Indeed, by aggregating fine grained data with various aggregation factors, it is possible to generate training data set including coarse grained data at various rates. With training data including fine grained data and coarse grained data, the model can be trained to produce the fine grained data provided the coarse grained data.

The upsampling system works with any upsampling factor. This upsampling factor may be equal to 2 or more. Several upsampling factors may be used at training stage, for example upsampling factors between 10 and 100 to tune the denoising model for any upsampling factor.

At inference stage, the upsampling system is configured to provide augmented data ("fine grained" data) at the high rate from input data at the low rate ("coarse grained" data).

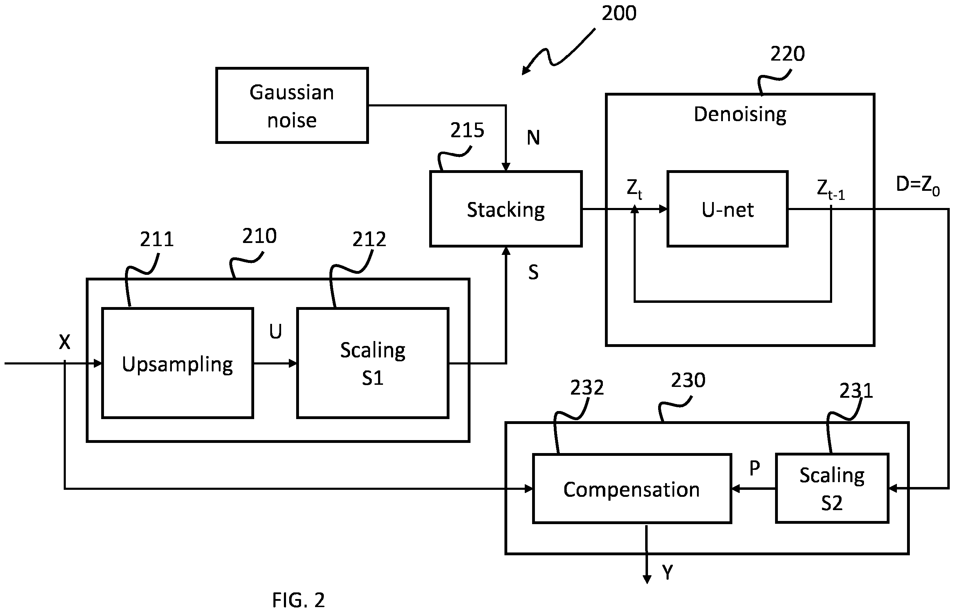

FIG. 2 is a schematic diagram of an upsampling system 200 at inference stage according to an example.

This diagram represents the upsampling method at inference stage which generates an output sequence Y (i.e. a fine grained traffic trace) at a second rate given an input sequence X (i.e. a coarse grained traffic trace) at a first rate. Each traffic trace corresponds to a sequence of values of a traffic-related parameter, e.g. a sequence of values of a traffic-related counter.

The input sequence is submitted to a preprocessing step before being used as conditioning in a loop of denoising step performed by an iterative denoising process. The denoise sequence at the output of the denoising process is then post-processed to provide an output sequence with well scaled and upsampled traffic-related counter values at fine granularity.

The upsampling system includes a preprocessing block 210, a stacking block 215, a denoising block 220, a postprocessing block 230. The preprocessing block 210 includes two sub-blocks: an upsampling sub-block 211 and a scaling sub-block 212, the order of these two sub-blocks 211 and 212 may be reversed. The postprocessing block 230 includes two sub-blocks: a compensation sub-block 232 and a scaling sub-block 231, the order of these two sub-blocks 231 and 232 may be reversed.

The input sequence X is converted to an upsampled sequence S that is an upsampled and scaled version of the input sequence X by applying a preprocessing function, including an upsampling function applied by the upsampling block 211 and a scaling function applied by the scaling block 212.

The starting point of the denoising process is a Gaussian noise (e.g. a fully isotropic Gaussian noise) $N_t$ that is stacked by the stacking block 215 with the upsampled sequence S to generate a stacked sequence Zt.

The scaling function 212 is a non-linear scaling function that performs range adaptation. The role of the scaling function 212 is to provide scaled values that are in the same range as the Gaussian noise and to adapt the dynamic of the signal to be able to take into account for example small variations in the input sequence X. Thanks to the scaling function applying a non-linear transformation, differences between large values tend to be reduced, differences between small values tend to be increased and the gap between large and small values is also reduced. This prevents as far as possible any characteristics (small values, large values) of the signal from taking precedence or being neglected during processing. Dynamic range adaptation is thus performed, where the dynamic range refers to the ratio (e.g. in dB) of the largest measurable signal to the smallest measurable signal.

The denoising block 220 is configured to apply a denoising process and includes a denoising model that is applied iteratively a number of times to generate a denoised sequence Zo. The denoising block 220 is configured to detect and remove Gaussian noise with the help of a conditioning signal in the form of the upsampled sequence S stacked with the Gaussian noise $N_t$. The upsample sequence S is used as conditioning signal for the denoising model to produce realistic fine grained traffic trace. The denoising model may be a diffusion probabilistic denoising model (e.g. a U-Net model). The Gaussian noise has the same dimension as the output sequence.

The denoised sequence $Z_0$ is converted to the output sequence Y by applying a postprocessing function, including a scaling function applied by the scaling block 231 and a compensation function applied by the compensation sub-block 232.

Various upsampling function may be applied by the upsampling block 211 to generate an upsampled sequence U (before scaling). The upsampling function applied by block 211 may be a function that add zero values between two input values of the input sequence X. The upsampling function applied by block 211 may be a function that repeat K times each value of the input sequence X, where K is the upsampling factor. The upsampling function applied by block 211 may be a convolutional filter applied to the input sequence X to generate a sequence U including intersample filtered values between two input values.

The upsampling function is configured to generate the upsample sequence U such that the traffic volume represented by the values of the upsample sequence U corresponds to the traffic volume represented by the values of the input sequence X once the values of the upsample sequence U are aggregated back by the aggregation factor K.

For example if the input sequence X includes 48 values and the upsampling factor is K=10, the upsampling function 211 generates an upsampled sequence U of 480 values by mean of replicating 10 times each value of the input sequence X. To avoid range shifts in traffic traces represented by the input values by the repetition of K times the same input value, each of the values of the upsampled sequence U is divided by the upsampling factor K such that the traffic volume represented by the values of the upsample sequence U corresponds to the traffic volume represented by the values of the input sequence X once the values of the upsample sequence U are aggregated back by the aggregation factor K.

The scaling function 212 is configured to generate, for each input value of the upsampled sequence U a scaled value of the upsampled sequence S that is in the same range as the Gaussian noise and to adapt the dynamic of the signal to be able to take into account for example small variations in the input sequence X.

For example, if the denoising model 220 uses as input Gaussian noise with mean of 0 and variance 1, a scaled value of the upsampled sequence S is scaled to be in the same range [-1,1]. Further, the dynamic range is also adapted by applying a non-linear scaling function S1 that takes into account a maximum input value.

For example, if the input values in the input sequence X represent a traffic volume expressions in kilobits and the maximum bandwidth is 10Gb/s, with a traffic volume reported each 5 minutes, then the maximum input value would be :

$$X_{max} = (5 * 60)\,[s]\,10^7[kbps]\ =\ 3 * 10^9\,[kb]$$

To scale an input kilobits value x in the initial range [0, $X_{max}$] on a linear scale into the noise range (e.g. [-1,1]), the following logarithmic scaling function S1(x) may be used:

$$S1(x) = (log_{10}(x+1)/g) - 1\ \ (1)$$

with a coefficient g that may be g=5 and is determined in dependence of $X_{max}$.

While FIG. 2 shows the scaling function S1 is applied after the upsampling function applied by block 211, the order of these two functions may be reversed, i.e. to apply the scaling function first and then the upsampling function.

A vector including the values of the scaled and upsampled sequence S is stacked by stacking block 215 with a vector includes values of a noise sequence $N_t$ to generate a stacked vector. The stacked vector Zt is provided as input to the denoising model 220 to generate iteratively denoised sequences $Z_{t-1}$, $Z_{t-2}$ etc. After a given number of iterations, a final denoised sequence D=Zo is obtained for the upsampled sequence S.

Once a denoised sequence D=Zo has been generated from the upsampled sequence S, a postprocessing is applied to the denoised sequence D having values in the noise range (e.g. [-1,1]). The postprocessing includes a scaling function S2 applied by block 231 and a compensation function applied by block 232. The scaling function S2 is the inverse function of the scaling function S1 applied by block 212 and is applied to each value of the denoised sequence D to generate an upsampled sequence P of denoised values that are in the same range [0, $X_{max}$] and with the same dynamic than the values of the input sequence X.

For example, if the values of the upsampled and scaled sequence S are in the [-1,1] range, the output values of the denoised sequence $Z_0$ produced by the model are also in the same range, and these values are scaled back to the input range by applying the inverse scaling function S2 231, e.g. to retrieve values in the kilobits space. This is achieved by inverting the function S1 defined by equation (1):

$$S2(z)\ =\ 10^{5*(z+1)} - 1$$

The compensation function applied by block 232 is applied for traffic envelope conservation with the objective that the output sequence Y once aggregated back by the upsampling facto K, matches with coarse grained input sequence X. This means that the output sequence Y perfectly fits inside the signal envelope given by the input sequence X.

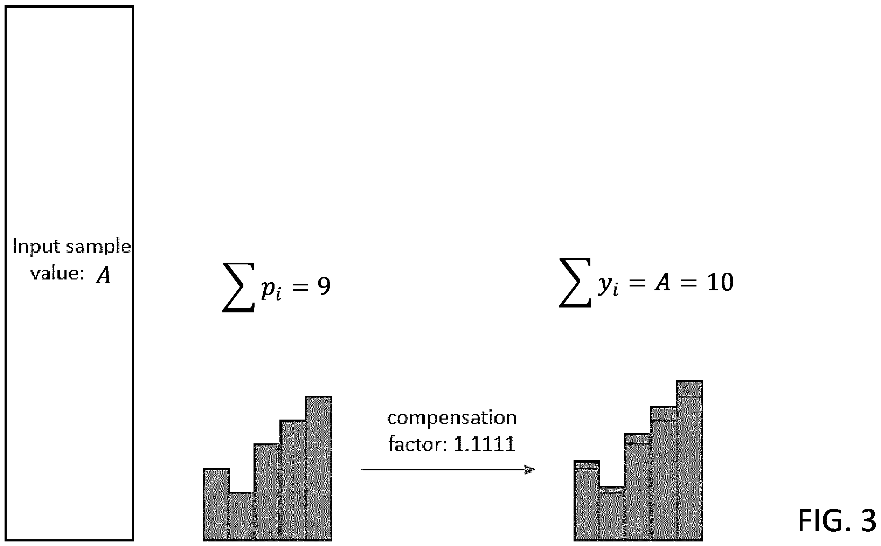

FIG. 3 illustrates the compensation function applied by sub-block 232 according to an example.

Once the outputs of the model have been scaled back, the denoised upsampled values of sequence P are aggregated back and compared to a corresponding input value in the input sequence X: in each group of K successive values, the upsampled values of sequence P are summed to compute a compensation factor to be applied to each value in the group. The compensation factor is computed such that, once applied to each value in the group, the sum of those compensated values is equal to a corresponding input value available in the input sequence X.

If we note the upsampled values of a group $p_i$ for i=1 to K and if we note the corresponding input value A of that group, the compensated values $y_i$ can be computed with the following formula:

$$y_i = \frac{A}{\sum p_i} p_i$$

such that $\Sigma\, y_i = A$.

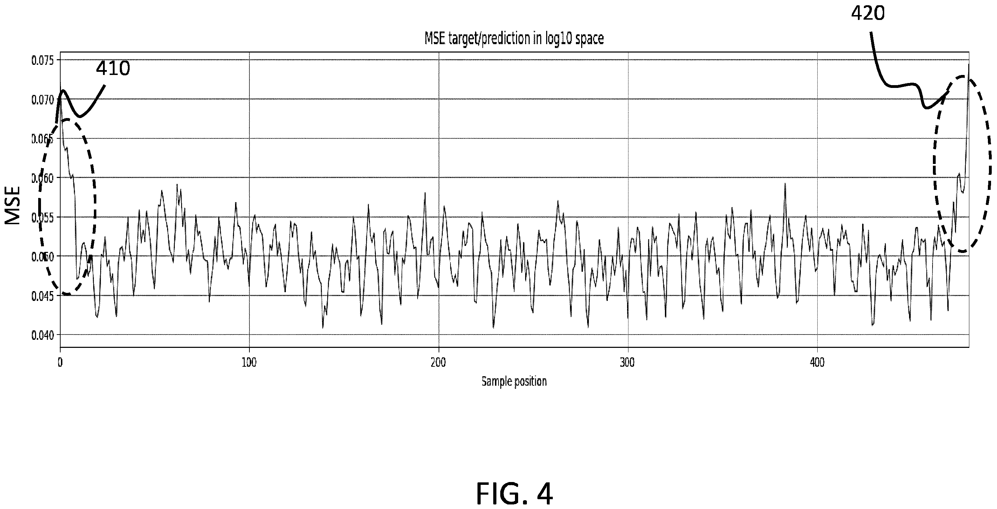

FIG. 4 shows the MSE at training stage between a target signal and a predicted upsampled signal generated by the denoising model on a logarithmic scale (before scaling and compensation).

As can be seen on FIG. 4 the starting portion 410 and the ending portion 420 of the signal includes significantly higher error values. In this example, the denoising model is not as accurate for the starting portion 410 and the ending portion 420 as when the denoising model is applied to the middle of the sequence. This can be easily explained by the fact that the denoising model leverages the surrounding of a sample to better generate a possible realistic denoised sequence. But for the start and respectively for the end of the sequence, the denoising model may have no information of what happened before, or respectively what will happened next. This missing information cannot be leveraged and hence the accuracy of the denoising model is dropping a bit in those start and end areas such that a higher loss may be detected during the training stage.

To compensate for this edge effect, the denoising model may be trained with the full sequence length but the start and end portions of each denoised sequence may be discarded by the postprocessing block 230, by keeping only the central portion corresponding to the most reliable part of the denoised sequence. At inference stage, the start and end portions of each denoised sequence D (or of the output sequence Y) may be discarded and / or the start and end portions of each denoised sequence may be signalled as being less reliable (e.g. signalled to the entity that will use the output).

For example discarding the first M values and the last Q values from the denoised sequence D or from the output sequence Y may be discarded and / or be signalled as being less reliable, where the number of values to be M and Q are determined based on error or loss values determined during the training stage. For example, M (respectively Q) may correspond to the length of the start portion (respectively the end portion) over which the MSE or loss values are (e.g. on average) above a threshold at training stage.

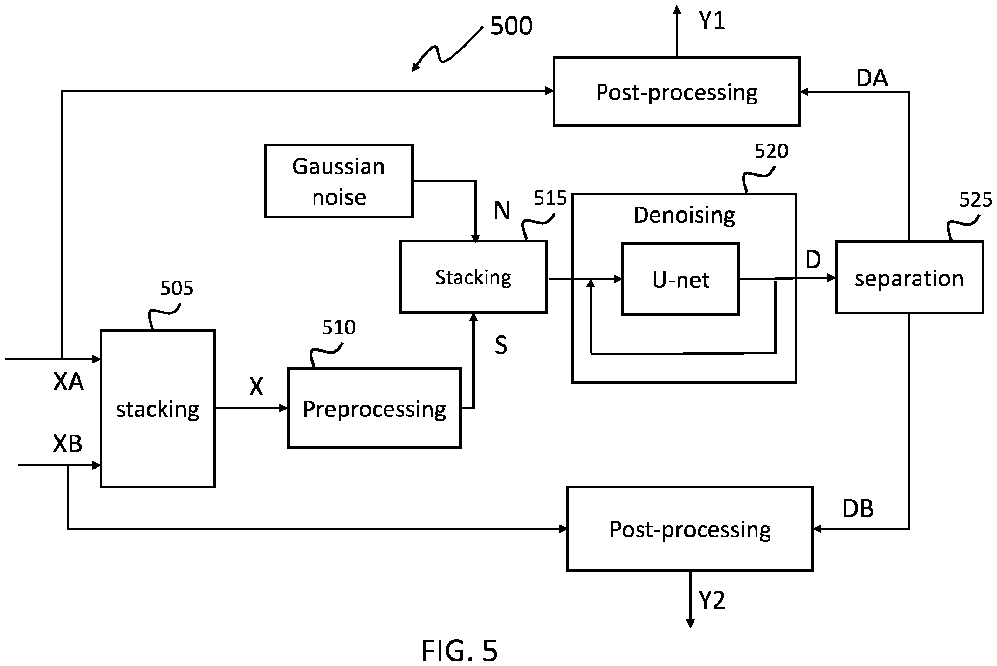

FIG. 5 is a schematic diagram of an upsampling system 500 at inference stage for upsampling two or more network traffic traces according to an example.

Each network traffic trace may correspond to a sequence of values of a traffic-related parameter, e.g. a sequence of values of a traffic-related counter. The two input sequences XA, XB may represent network traffic traces over a same period of time. This example can be generalized to any number of input sequences.

The example upsampling system 500 allows to upsample jointly two input sequences XA, XB representing traffic traces via respective channels over a same physical or logical transmission link by applying the same processing chain (i.e. preprocessing, denoising and postprocessing) to each input sequence, the denoising process being performed jointly for the two input sequences as will be described in detail below. At inference time, the upsampling system generates two output upsampled sequences.

For example the input sequence XA represents traffic trace on a downstream channel of a transmission link and XB represents traffic trace on an upstream channel of the same transmission link. For example the input sequence XA represents traffic trace on a first optical channel (having first central wavelength) and XB represents traffic trace on a second optical channel (having second central wavelength).

The upsampling system may include (i) two preprocessing blocks (e.g. one preprocessing block per input sequence) to generate two corresponding pre-processed sequences from the two input sequences XA, XB respectively and (ii) a stacking block configured to stack the two pre-processed sequences, where the preprocessing applied to the input sequences XA, XB may be the same for each input sequence XA, XB.

Alternatively, as represented by FIG. 5, the upsampling system may include a stacking block 505 configured to stack the two input sequences XA, XB to generate a stacked input sequence X, the stacking block 505 being followed by a preprocessing block 510 for generating a pre-processed sequence S from the stacked input sequence X.

The upsampling system may include a second stacking block 515, a denoising block 520, a separation block 225, two postprocessing blocks 530A, 530B as illustrated by FIG. 5.

The preprocessing block 510 is configured to generate a scale and upsampled sequence S from the stacked input sequence X.

The description of preprocessing block 210 made by reference to FIG. 2 is applicable to the preprocessing block 510 of FIG. 5. As in FIG. 2, the preprocessing block 510 includes two sub-blocks: an upsampling sub-block and a scaling sub-block, not shown in FIG. 5 for simplicity reasons.

The upsampling function performed by the upsampling sub-block of the preprocessing block 510 may be one of the upsampling functions described by reference to FIG. 2 for preprocessing block 210.

The scaling function performed by the scaling sub-block of the preprocessing block 510 may be one of the scaling functions described by reference to FIG. 2 for preprocessing block 210.

The stacking block 215 is configured to generate a stacked vector by stacki ng:

- a first vector including the values of the preprocessed sequence S,
- a second vector including values of a noise sequence $N_t$.

The description of the denoising block 220 made by reference to FIG. 2 is applicable to denoising block 520 of FIG. 5. The stacked vector Zt is provided as input to the denoising model 520 to generate iteratively denoised sequences $Z_{t-1}$, $Z_{t-2}$ etc. After a given number of iterations, a final denoised sequence D is obtained for the upsampled sequence S. This allows to perform denoising jointly of the two sequences.

The separation block 525 is configured to separate the final denoised sequence into two denoised sequences: a first denoised sequence DA corresponding to the conversion of the first vector SA and a second denoised sequence DB corresponding to the conversion of the second vector SB.

The postprocessing block 530A (respectively 530B) is configured to generate an output sequence YA (respectively YB) from the denoised sequence DA (respectively DB).

The description of postprocessing block 230 made by reference to FIG. 2 is applicable to each of the preprocessing blocks 530A, 530B of FIG. 5. As in FIG. 2, each postprocessing block 530A, 530B includes two sub-blocks: a compensation sub-block and a scaling sub-block, not shown in FIG. 5 for simplicity reasons.

The scaling function performed by the scaling sub-block of the postprocessing blocks 530A, 530B may be one of the scaling functions described by reference to FIG. 2 for postprocessing block 230. The scaling function performed by the scaling sub-block of the postprocessing blocks 530A (respectively 530B) is the reverse function of the scaling function performed by the scaling sub-block of the preprocessing blocks 510A (respectively 510B). For example the denoised sequences DA, DB may be on logarithmic scale and they are scaled back in the linear space.

The compensation function performed by the compensation sub-block of the postprocessing blocks 530A, 530B may be the same for each postprocessing blocks 530A, 530B and may be the compensation function described by reference to FIG. 2 for postprocessing block 230. The compensation function generates an output sequence YA or YB.

The two channels may correspond an upstream channel and s downstream channel. By processing jointly the upstream and the downstream traffic traces into the same tensor the below advantages may be obtained.

The model can build a stronger global representation of traffic traces having a single latent representation, e.g. for both upstream and downstream traffic traces. Having this single representation allows the model to sample more realistic pairs of upstream and downstream traces since they belong to a single point in the model hyperspace.

The model can make use correlation between the upstream and downstream conditioning signals to enhance the information contained just in a single stream, this greatly help identifying the noise that was added to $x_0$.

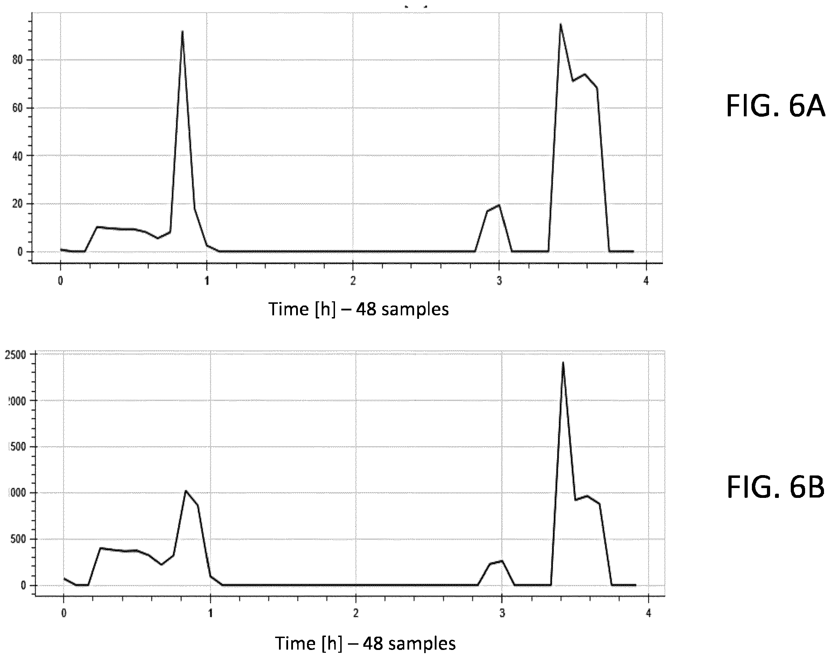

FIGS. 6A (respectively 6B) shows a curve representing an input sequence XA (respectively XB), i.e. the variations over time of a traffic-related counter according to an example.

FIG. 6A corresponds to variations over a period of 4 hours of aggregated 5 minutes byte counter values of upstream traffic of a communication link and FIG. 6B corresponds to variations over the same period of time of aggregated 5 minutes byte counter values of downstream traffic for the same communication link.

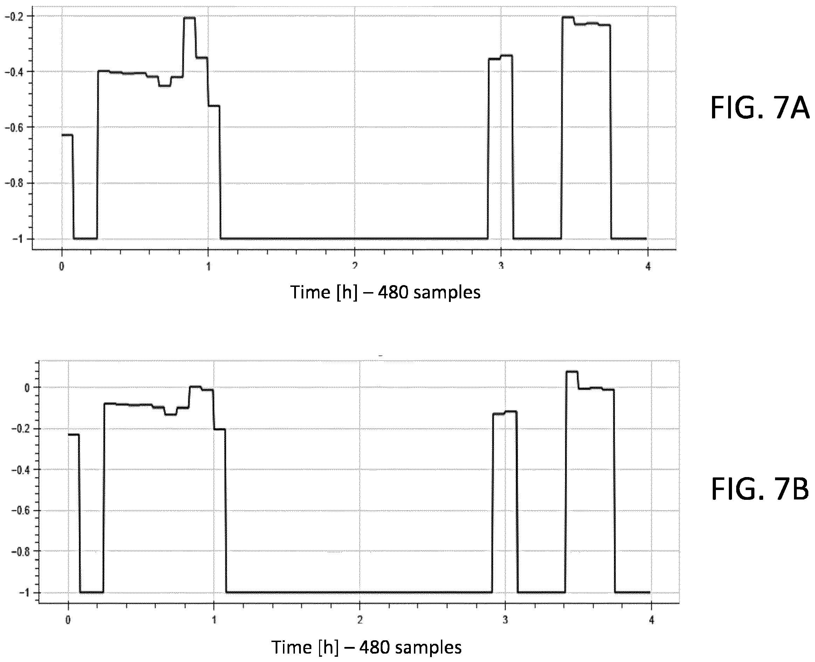

FIGS. 7A (respectively 7B) shows the conditioning signal SA (respectively SB) obtained after preprocessing of the input sequence XA (respectively XB).

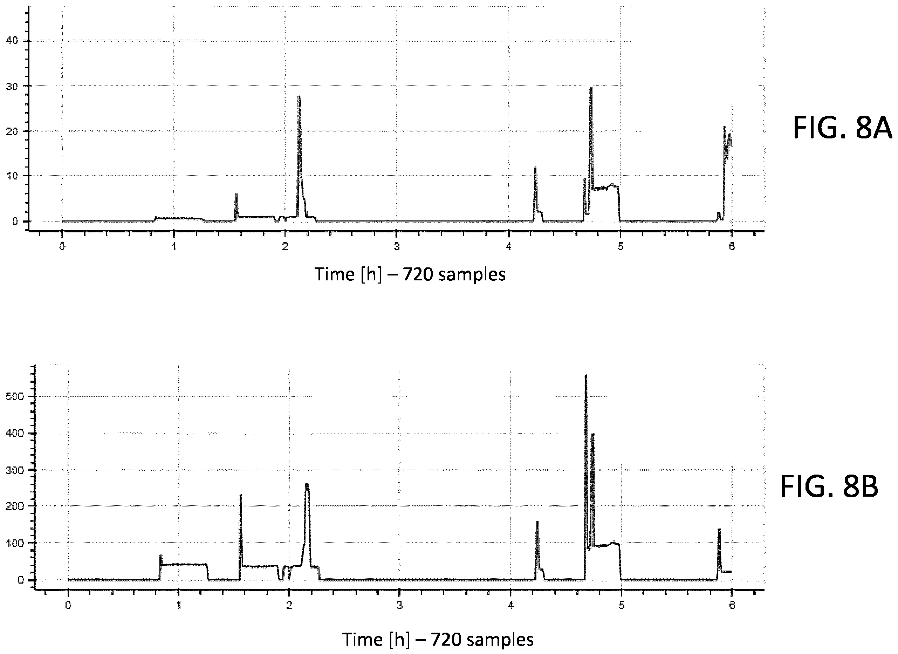

FIGS. 8A (respectively 8B) shows the output upsampled signal YA (respectively YB) obtained after postprocessing of the denoised signal DA (respectively DB). These figures illustrate the system's ability to generate an upsample output signal having high peaks of low width from a conditioning signal that is more stair-step in shape.

In one or more embodiments, a generative diffusion model is used for the denoising, e.g. a Denoising Diffusion Probabilistic Model is used. A diffusion model or probabilistic diffusion model is a parameterized Markov chain trained using variational inference to produce samples matching the input data after finite time.

Diffusion models are deep generative models that work by adding noise (e.g. Gaussian noise) to the available training data (also known as the forward diffusion process) and then reversing the process (known as denoising or the reverse diffusion process) to recover the data. The model gradually learns to remove the noise. This learned denoising process generates new, high-quality signals from randomly noised signals.

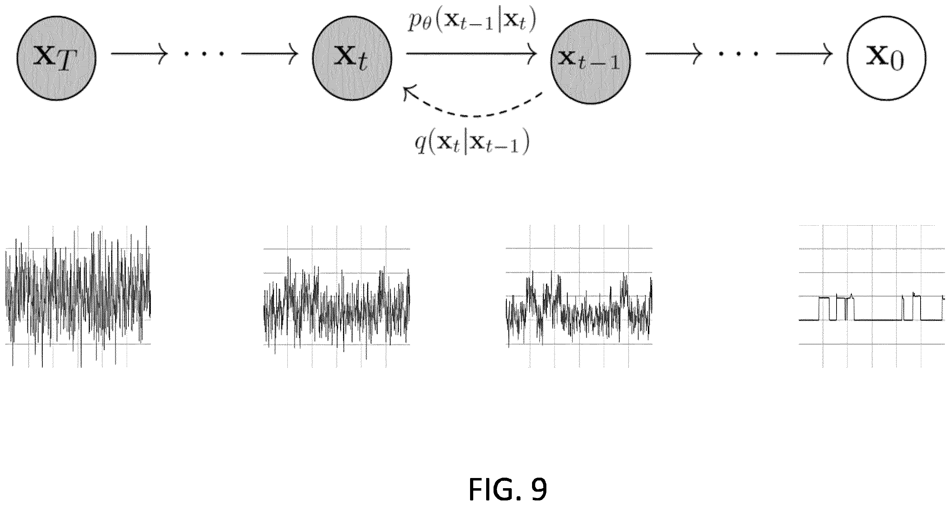

FIG. 9 illustrate the behaviour of a Markov chain trained for iteratively denoising a signal $x_T$ step by step to generate a denoised signal $x_0$.

As shown in FIG. 9, network traffic data may be synthetized from a random noise, by using a conditioning signal consisting of the aggregated traffic data by applying an iterative (reverse diffusion) denoising process.

Forward diffusion process

To train the model to remove noise out of a noisy signal, noisy traffic signals are generated by a forward diffusion process. The principle is to add noise step by step to a target low granularity traffic signal ($x_0$) based on a noise scheduler. After T noising steps, the initial traffic signal is assumed to be completely destroyed and the resulting noised traffic signal $x_T$ can be considered isotropic Gaussian noise.

The noising Markov chain can be expressed as:

$$q(x_t|x_{t-1}) = \mathcal{N}(x_t; \sqrt{1 - \beta_t}x_{t-1}, \beta_t I)$$

where the $\mathcal{N}(x; \mu, \sigma)$ represents the sampling of x out of a Gaussian distribution of mean $\mu$ and variance $\sigma$. The noising scheduler $\beta$ may be chosen so that initial information contained in $x_0$ is not destroyed too rapidly. One interesting property of Markov chains is that the next state of the chain does only depend on the previous state in the chain, not the states before. Thanks to that property, there is a straightforward way to compute directly $x_t$ from $x_0$ without having to go all the intermediary steps (from 0 to t): $x_t$ can be sampled directly from $x_0$:

$$q(x_t|x_{t-1}) = \mathcal{N}(x_t; \sqrt{\bar{\alpha}_t}x_0, (1 - \bar{\alpha}_t)I) \tag{3a}$$

with

$$\alpha_t := 1 - \beta_t$$

and

$$\bar{\alpha}_t := \prod_{s=1}^{t} \alpha_s$$

and $I$ is the identity matrix.

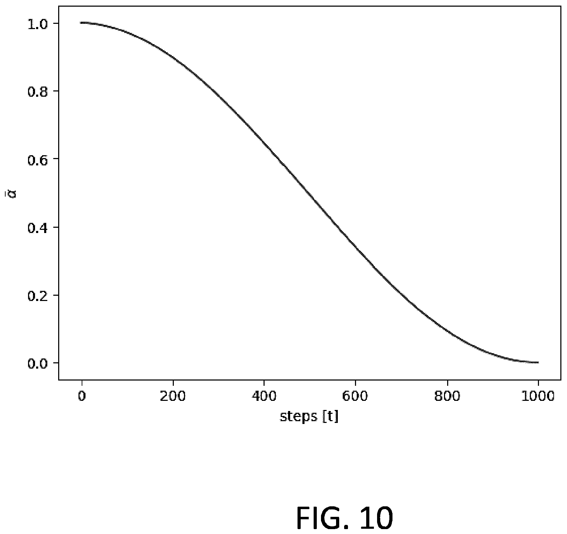

With this notation, the noising schedule $\bar{\alpha}_t$ may be represented with respect to the forward noising time steps t as shown in FIG. 10. The $\bar{\alpha}_t$ factor represents the amount of gaussian noise added to the initial fine grained traffic signal $\mathbf{x_0}$ along the noising step t.

With the above reparameterization, sample $x_t$ can be expressed as a function of $x_0$ using equation (3a) as:

$$x_t = \sqrt{\bar{\alpha}_t}x_0 + \sqrt{1 - \bar{\alpha}_t}\epsilon \quad \text{with } \epsilon \sim \mathcal{N}(0, I) \tag{3b}$$

where $\varepsilon$ is a realisation of $\mathcal{N}(0, I)$, a gaussian distribution of mean 0 and variance I.

Reverse diffusion process

At any given step t, a noisy traffic trace may be constructed with a predefined noise scheduler. A deep learning model is trained to be able to extract the added noise at that specific step t. In other terms, we need to find the $\theta$ parameters of a distribution $p$ such that $x_{t-1}$ can be sampled from $x_t$. To ease that parametrization, the model can take the advantage of having partial knowledge of $x_0$ by relying on the conditioning signal which represents the preprocessed aggregation of the input signal $x_0$ by a factor equal to the upsampling factor K.

When the added gaussian noise is small enough between steps, the distribution function $p_\theta$ can be considered gaussian as well and can be expressed as:

$$p_\theta(x_{t-1}|x_t) := \mathcal{N}(x_{t-1}; \mu_\theta(x_t, t), \Sigma_\theta(x_t, t))$$

where $\mu_\theta$ is the mean and $\Sigma_\theta$ the variance of the distribution to be predicted.

Sampling process

With the distribution function $p_\theta$, it is then possible to create an inverse Markov chain starting from an isotropic gaussian noise $x_T$ and recursively sample $x_{T-1}$, then $x_{T-2}$, $x_{T-3}$,... until a denoised signal $x_0$. This is called the sampling process.

An interesting property of diffusion models is that the sampling process can have fewer steps than the range of steps used in the training process.

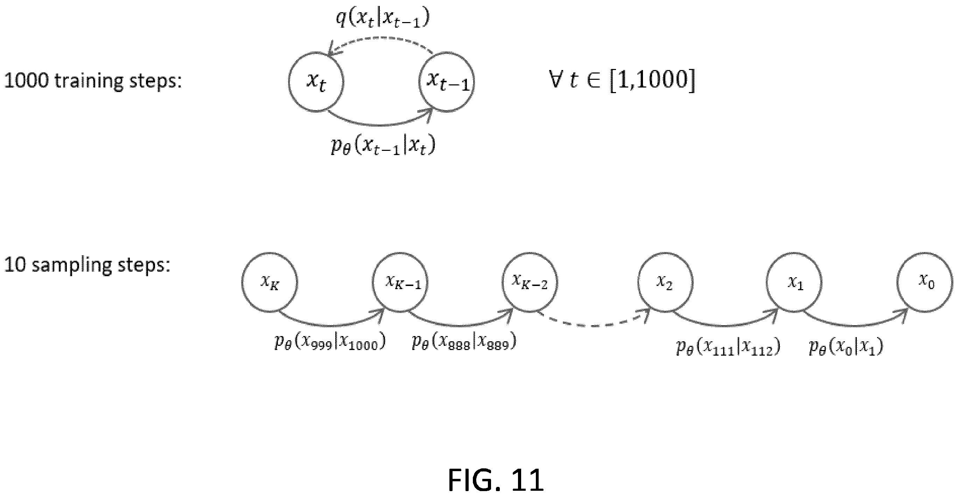

FIG. 11 illustrates aspects of a resampling process according to an example.

For example, the optimal number of training steps T may be 1000. This means that during training, $x_t$ was

sampled with a randomly picked *t* between 0 and 1000. Then the model objective was to revert that noising step t by predicting the noise that was added for that specific step.

During sampling, Diffusion Models are flexible enough to cope with fewer sampling steps than in the training steps. For example, it is possible to have a number T2 of sampling steps to sample from $x_T$ to $x_0$. To reduce the number of sampling steps from *T* to T2, we use T2 evenly spaced real numbers between 1 and T (inclusive), and then round each resulting number to the nearest integer.

For example, if we want to sample $x_0$ in 10 steps while the model was trained with 1000 steps, we may start from an isotropic gaussian noise $x_{1000}$ and sample $x_{999}$ but then pass the sample $x_{999}$ to the model as being $x_{889}$ to sample $x_{888}$ and so on until $x_0$ is generated.

FIG. 11 provide a visual support of this resampling step concept with the 10 versus 1000 steps example.

Training Objective

The main objective of the denoising model is to produce $x_0$ in the fine grained traffic signals space. As $x_0$ is produced by the distribution $p_\theta$, training may be performed by optimizing the usual variational bound on negative log likelihood:

$$\mathbb{E}[-\log p_\theta(x_0)] \tag{4}$$

As $x_0$ depends on the chain $x_T, \ldots, x_0$ log likelihood is intractable and further simplifications may be used. With the help of variational lower bound and Bayes equations it is possible to write an upper bound of (4), that will be minimized by the model on parameters $\theta$ as follow:

$$L_{vlb} := L_0 + D_{KL}(q(x_{t-1}|x_t, x_0)||p_\theta(x_{t-1}|x_t)) + L_T \tag{5}$$

where $D_{KL}$ is the Kullback-Leibler (KL) divergence where q is defined by equation (3a). The terms $L_0$ and $L_T$ are negligible and may be ignored for the minimization of the error. For further details, see for example reference [01].

Equation (5) uses q posterior and no more q prior. Going further in the mathematical developments, we can get to:

$$L_{simple} := \mathbb{E}_{t,x_0,\epsilon}[\|\epsilon - \epsilon_\theta(x_t, t)\|^2] \tag{6}$$

where $\varepsilon_\theta$ is a function approximator intended to predict the realization $\varepsilon$ from $x_t$ and $\varepsilon_\theta$ is the prediction of $\varepsilon$.

One simplification to arrive to equation (6) is to set $p_\theta$ variance ($\Sigma_\theta$) to the same schedule as q (i.e. $\beta_t$).

This simple objective $L_{simple}$ gives quite good results, but the accuracy may be decreasing quite rapidly when the number of resampling steps decreases.

The model may also be trained by using another objective $L_{hybrid}$:

$$L_{hybrid} = L_{simple} + \lambda L_{vlb}$$

where $L_{vlb}$ is mainly a Kullback-Leibler (KL) divergence between $q(x_{t-1}|x_t, x_0)$ and $p_\theta(x_{t-1}|x_t)$ (see equation (5)).

The KL divergence measures the difference between two probability distributions over the same variable x and if those two distributions are gaussians, their KL divergence can easily be computed using their respective means and variances.

It can be showed that q posterior mean can be derived analytically from $x_0$, $x_t$ and $\bar{\alpha}_t$ all known at forward process time and q posterior variance is just a combination of $\bar{\alpha}_t$.

For the mean and variance of $p_\theta$, it can also be shown that the mean can be derived from $\varepsilon_\theta(x_t, t)$ while the variance should be predicted by the model since $L_{simple}$ provides no learning signal for $\Sigma_\theta(x_t, t)$.

As disclosed in [01], the mean $\mu_\theta(x_t, t)$ may be derived from $\varepsilon_\theta(x_t, t)$ based on equation (7):

$$\mu_\theta(x_t, t) = \frac{1}{\sqrt{\alpha_t}}\left(\mathbf{x}_t - \frac{\beta_t}{\sqrt{1 - \bar{\alpha}_t}}\epsilon_\theta(\mathbf{x}_t, t)\right) \tag{7}$$

According to reference [02], it can be shown that $\Sigma_\theta(x_t, t)$ has upper and lower bounds respectively $\beta$ and $\tilde{\beta}$ with $\beta_t$

being the variance of the prior q and $\tilde{\beta}_t := \frac{1-\overline{\alpha}_{t-1}}{1-\overline{\alpha}_t} \beta_t$ the variance of the posterior $q$.

It can be shown that the reasonable range for $\Sigma_\theta(x_t, t)$ is very small, so it would be hard for a neural network to predict $\Sigma_\theta(x_t, t)$ directly, even in the log domain. Instead, it is better to parameterize the variance as an interpolation between $\beta_t$ and $\tilde{\beta}_t$ in the log domain.

In particular, the model outputs a vector $v$ containing one component per dimension, and we turn this output into variances as follows:

$$\Sigma_\theta(x_t, t) = e^{v_\theta \, log \, \beta_t + (1-v_\theta) \log \tilde{\beta}_t} \qquad (8)$$

With that we have all means and variances to compute the $L_{vlb}$ term and finally the loss $L_{hybrid}$ of our model.

Experiments were made to evaluate the optimal number of sampling steps for the application to upsampling of traffic traces.

In the case the model objective is $L_{simple}$ alone, the number of sampling step need to be almost as high as the number of training steps to reach the best model accuracy.

In the case the model objective was $L_{hybrid}$, the number of sampling step can be reduced quite drastically without impacting the sampling accuracy. It was found that the optimal number of training steps and sampling steps may be 1000 and 50 respectively. This balance between training steps and sampling steps allows remarkable results with limited inference processing time.

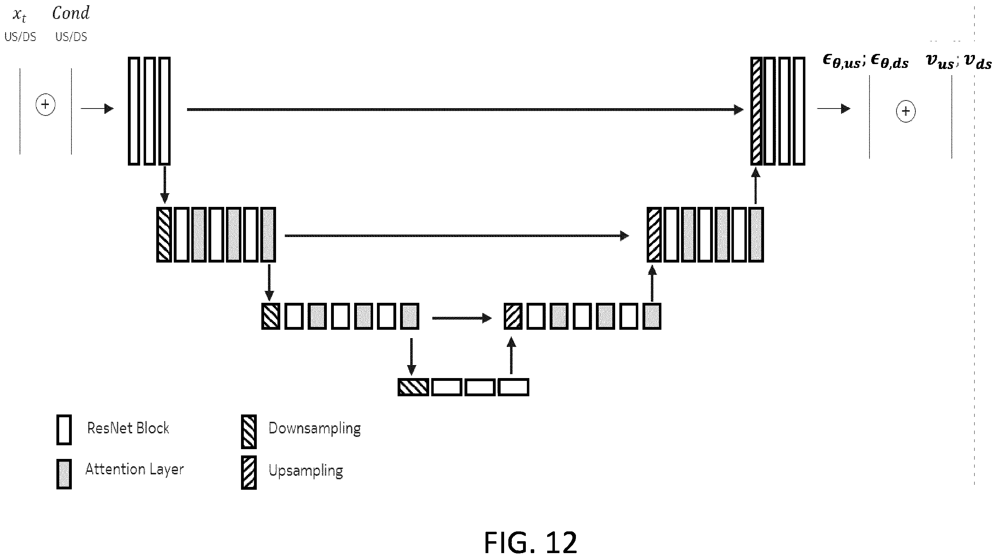

FIG. 12 shows a high level view of a U-Net model architecture according to an example.

This U-Net model may be used as denoising model at each iteration of the iterative denoising process. The U-Net model may include some additional attention layers. In the example of FIG. 12, the U-Net model includes functional blocks (ResNet blocks, attention layers, downsampling blocks and upsampling blocks) that share the same hyperparameters without a need for specific tuning of the hyperparameters.

The inputs $x_t$ and *Cond* are respectively the target traffic sequence altered by noise added by the forward process at step t and the conditioning signal, i.e. the coarse grained traffic counters. Those inputs are stacked by channels (upstream (us) and downstream (ds) channels are stacked in $x_t$ and respectively in the conditioning signal *Cond)* before entering in the U-Net model. The U-Net model may be mainly composed of ResNet blocks surrounded by attention layers (or not), followed by downsampling layers (convolutional layers) or upsampling layers (nearest interpolation layers).

The output of the model includes 4 channels, representing the noise ($\varepsilon_{\theta,us}$; $\varepsilon_{\theta,ds}$) added by the forward pass respectively for the upstream and the downstream and the interpolation factors ($v_{us}$; $v_{ds}$) respectively for the upstream and the downstream.

These outputs are used to compute $\Sigma_\theta(x_t, t)$ based on equation (8) and $\mu_\theta(x_t, t)$ based on equation (7), both for upstream (with $\varepsilon_\theta = \varepsilon_{\theta,us}$ and $v_\theta = v_{us}$) and downstream (with $\varepsilon_\theta = \varepsilon_{\theta,ds}$ and $v_\theta = v_{ds}$).

Then $\Sigma_\theta(x_t, t)$ and $\mu_\theta(x_t, t)$ are used to compute the output denoised signal D, corresponding to $x_{t-1}$

$$x_{t-1} = \mu_\theta(x_t, t) + \Sigma_\theta(x_t, t)z$$

with

$$z \sim \mathcal{N}(0, I) \text{ if t>0 otherwise z=0}$$

Training strategy

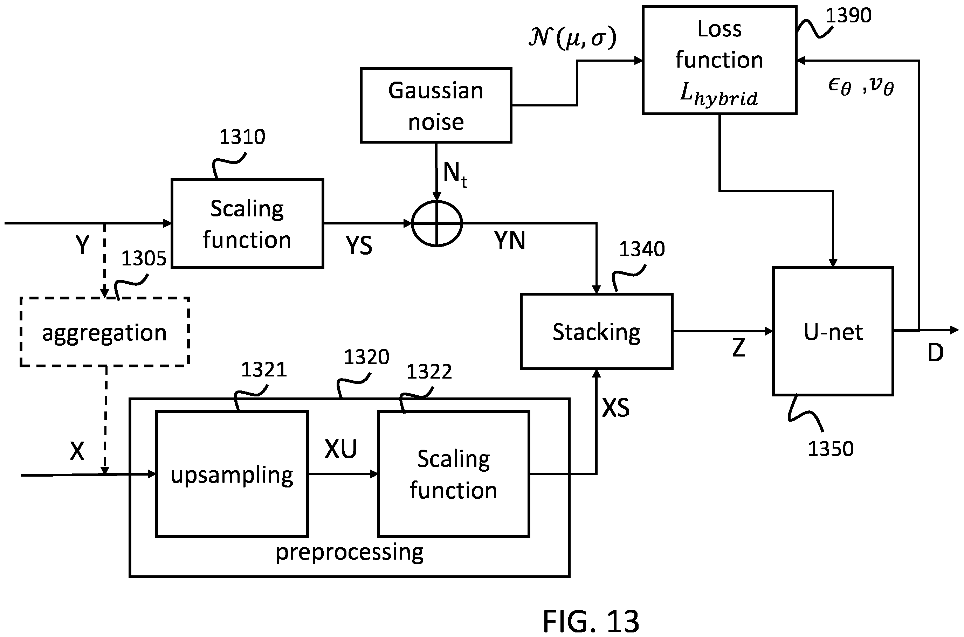

FIG. 13 is a schematic diagram of an upsampling system at training stage according to an example where $L_{vlb}$ is computed as a function of $\varepsilon_\theta$ and $v_\theta$. and the distribution $\mathcal{N}(x; \mu, \sigma)$ of the added Gaussian noise. See for example [02].

As seen in the theory behind diffusion models described herein, the model is trained to learn a representation of the real traffic traces, so that it will be able starting from an isotropic gaussian noise and the help of some conditioning to generate traffic traces belonging to the same space as real traces. To construct that representation, the model relies heavily on the traffic sequences provided as $x_0$. The training dataset provides examples in the real traffic traces space that are covering as much as possible all areas of that space and in a well-balanced way.

To train the diffusion model, hundreds of thousands of long traffic sequences (one week) of traffic in both upstream and downstream with a low granularity aggregation (30 sec) may be generated. Long sequences of several days allow to have all kind off traffic patterns covering all king of human traffic usage behaviour (working days, evenings, nights, weekends).

Then the training dataset is constructed by extracting smaller sequences from those long sequences based on randomly smaller time windows (for example 6h). Since those smaller sequences are low granularity aggregation, those can be used in the preprocessing to create the $x_0$ sequences for the forward diffusion process. Then for each $x_0$ a $x_t$ at random $t \in [1, T]$ is generated. From those targets, $\varepsilon$ and $v$ are derived.

Conditioning signals are also constructed from those low granularity sequences simply by aggregating their values by the upsampling factor. Once this is done, the preprocessing will scale the conditioning in the [-1,1] range by applying the same scaling function S1 as it is done at inference stage (see FIG. 2).

As illustrated by the training system of FIG. 13, a sequence Y of input training values of a traffic-related counter at a second rate is obtained, where the second rate is equal to a first rate multiplied by an upsampling factor K. The input training values are in a first range.

A corresponding sequence X of aggregated training values at the first rate in the first range is obtained, the aggregated training values corresponding to an aggregated version of the input training values. The sequence X of aggregated training values may be obtained by aggregation (block 1305) the sequence Y of input training values.

The input training values of sequence Y of input training values are scaled by block 1310 to generate a first sequence YS of scaled training values in the second range at the second rate. The scaling function of block 1310 is the same as the scaling function S1 used at inference stage (see for example block 212, figure 2).

The sequence X of aggregated training values is preprocessed by block 1320 to generate a second sequence XS of scaled training values in the second range at the second rate. The preprocessing function of block 1320 includes an upsampling function (block 1321) and a scaling function (block 1322). The preprocessing function of block 1320 is the same as the preprocessing function used at inference stage (see for example block 210, figure 2) and uses the same scaling function (applied by block 1322) as the one applied by block 1310 to the sequence Y of input training values. The scaling function of block 1322 is thus also the same as the scaling function S1 used at inference stage (see for example block 212, figure 2).

A noise signal $N_t$ in the second range is added to the first sequence YS of scaled training values to generate a first sequence YN of noisy training values.

A vector including values of the first sequence YN is stacked by stacking block 1340 with a vector including values of the second sequence XS of scaled training values to generate a second sequence Z of noisy training values in a stacked vector Z.

One iteration (e.g. the U-Net model) of the iterative denoising process is applied by block 1350 to the stacked vector Z to generate a sequence D of output denoised values. Here the first sequence YN of noisy training values is stacked with the second sequence XS of scaled training values (XS being used as conditioning signal) and is provided as input to the U-Net to find $\varepsilon_\theta$ and $v_\theta$ that minimize the loss function.

A loss is computed by block 1390 based on the added noise $N_t$ and the outputs $\varepsilon_\theta$ and $v_\theta$ of block 1350 and one or more parameters of the U-Net are adapted in order to minimize the loss function. The loss evaluates how distant are two probabilistic distributions and the training process aims to minimize this distance. The loss may evaluate the divergence between q posterior and p and is the sum of the terms defined by equation (5) and (6). The loss may be computed training epoch by training epoch.

During a training epoch, the added noise signal $N_t$ is applied to the signal YS for a random step t using the equation (3b) which is driven by the scheduler $\beta$ at step t, this noisy signal YN is then used to train the underlying model to denoise the signal YN and predict this signal at step t-1. The output of the U-net is $\varepsilon_\theta$ and $v_\theta$ which are used to compute the output denoised signal D, corresponding to $x_{t-1}$.

During a training epoch, the added noise signal Nt varies to add various levels of noise by selecting random step t in the range [0,T] to train with more or less noise the underlying model which will then be used at each iteration of the iterative denoising process at inference stage going from step t=T to t=0.

Results and performances

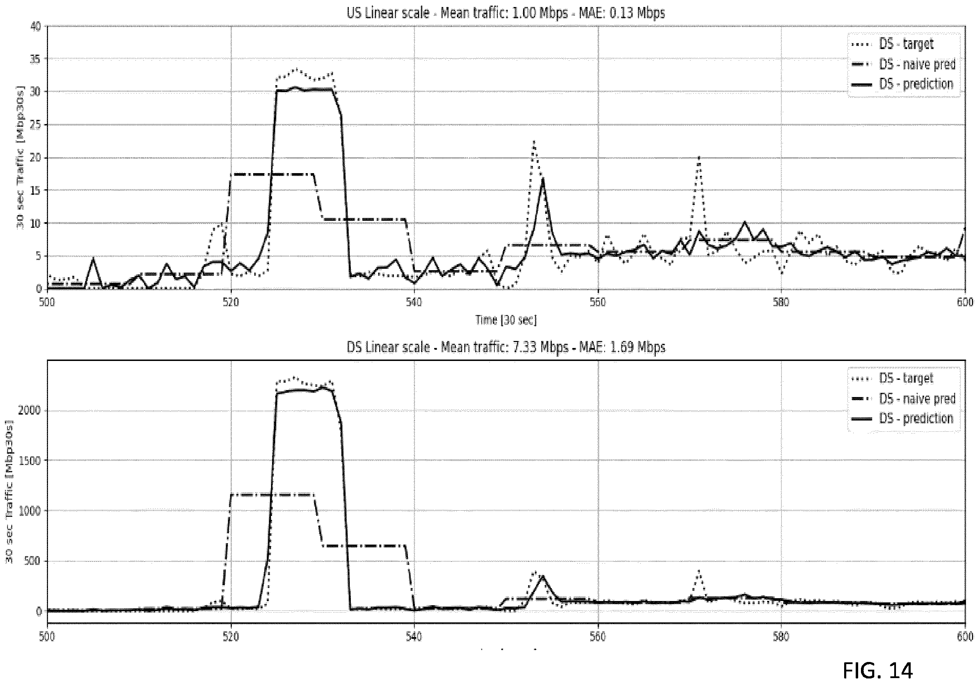

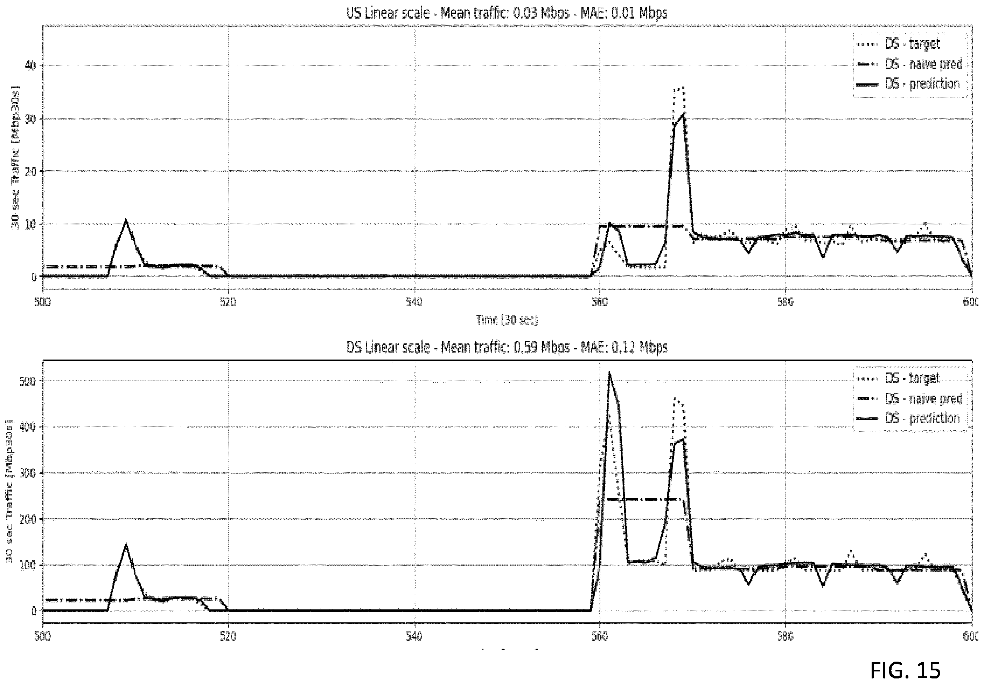

Results with upsampling 5 minutes traffic counters to 30 seconds traffic counters are shown in FIG. 14 and 15. Those examples are coming from a validation dataset that the model has never processed during training.

These figures illustrate that the system disclosed herein can generate fine grained patterns that could not be generated by any traditional arithmetic means having the coarse grained patterns as input.

In the figures 14 and 15, the upstream ("us") and the downstream ("ds") are upsampled simultaneously by the model. For each stream, the figure shows the target signal (Y in figure 13), the prediction (Z-1 in figure 13) obtained at the output of the denoising process and a naive prediction corresponding to the conditioning signal (U in figure 13) generated using sample and hold interpolation.

FIG. 14 shows example of upsampled traffic counters from 5 minutes aggregated traffic to 30 seconds aggregated traffic with a zoom on a subset corresponding to samples 500 to 800. This figure illustrates the system's ability to generate an upsampled signal including single, broad peaks from a conditioning signal that are more stair-step in shape (around sample 550 in FIG 14).

FIG. 15 shows another example of upsampled traffic counters from 5 minutes aggregated traffic to 30 seconds aggregated traffic with a zoom on a subset corresponding to samples 500 to 800. This example illustrates the system's ability to generate an upsampled signal including double peaks from a conditioning signal having a single plateau: see the portion between samples 560 and 570.

Also, even if it is not obvious to see it on the graphs, thanks to the smart postprocessing of the model, the aggregation of the prediction by a factor 10 match exactly the aggregation of the targets.

Another interesting example of the upsampling system capabilities is shown in FIG. 14 where some fine grained pattern are generated by the diffusion based upsampling system while this information is not obviously present in the aggregated traffic trace.

Main use-case directly relates to the ability to offer a better view and, therefore, to detect better transient phenomenon occurring in the network traffic data., without fine-enough granularity in those traffic data, QoS/QoE impacting events tend to be averaged out or, worst, tend to produce false positive. This prevents any subsequent processing to reliably detect those events and, therefore, to efficiently take action or troubleshoot those links. With the present domain-embedding models, a lot of network specific knowledge leverage the inner contextual information present in the low-granular traces in order to propose an enhanced upsampled version of the traffic trace, very close from the underlying true and presenting the network-specific patterns. This offers a detailed visibility, far more realistic than with classical mathematical upsampling techniques, enabling this time practical troubleshooting or optimization tasks.

Another direct use-case resides in the efficient data storage / compression area. Indeed, there are challenges in retrieving and storing in a scalable way for an entire network and over an extended period highly-granular data. Moreover, the volume in TBytes to store would be huge. In that sense, through this invention, we offer a solution to keep aggregating the long-term/historical data, with the solution to reliably re-upsample them when highly-granular data are required. Compared to compression, this allow to still be able to work directly on the aggregated data (for some tasks that does not require highly granular data), as those data would still be meaningful (and not compressed in a Zip like format, where the compressed version is not intelligible anymore).

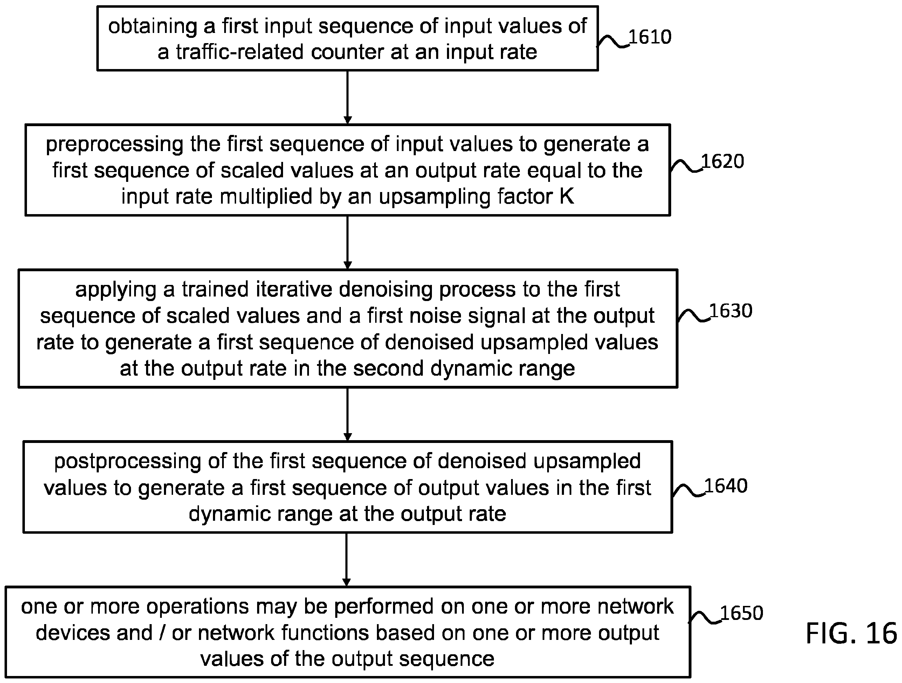

FIG. 16 shows a flowchart of a method for upsampling network traffic traces according to one or more example embodiments. The steps of the method may be implemented by a network device according to any example described herein.

While the steps are described in a sequential manner, the person skilled in the art will appreciate that some steps may be omitted, combined, performed in different order and / or in parallel.

In step 1610, a first temporal sequence of input values of a traffic-related counter at an input rate is obtained. The input values are in a first range;

In step 1620, the first temporal sequence of input values is preprocessed to generate a first sequence of scaled values at an output rate equal to the input rate multiplied by an upsampling factor K. The scaled values are in a second range;

In step 1630, a trained iterative denoising process is applied to the first sequence of scaled values and a first noise signal at the output rate to generate a first sequence of denoised upsampled values at the output rate in the second range. The first noise signal has values in the second range.

In step 1640, the first sequence of denoised upsampled values is postprocessed to generate a first temporal sequence of output values in the first range at the output rate. Each input value in the first temporal sequence of input values is equal to a sum of K corresponding successive output values.

In step 1650, one or more operations may be performed on one or more network devices and / or network functions based on one or more output values of the output sequence.

The operation(s) may depend on the context and / or a scenario and / or network environment and / or the type of traffic-related counter be monitored. The one or more operations may include at least one of a configuration operation, a resource management operation, a monitoring operation, a channel estimation, an optimization operation, a repair operation, a maintenance operation, a restart, a reboot, a software update, a signaling operation, etc.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe a set of steps as a sequential process, many of the steps may be performed in parallel, concurrently or simultaneously. Also some steps may be omitted, combined or performed in different order. A process may be terminated when its steps are completed but may also have additional steps not disclosed in the figure or description.

Each described process, function, engine, block, step described herein can be implemented in hardware, software, firmware, middleware, microcode, or any suitable combination thereof.

When implemented in software, firmware, middleware or microcode, instructions to perform the necessary tasks may be stored in a computer readable medium that may be or not included in a host device or host system configured to execute the instructions. The instructions may be transmitted over the computer-readable medium and be loaded onto the host device or host system. The instructions are configured to cause the host device or host system to perform one or more functions disclosed herein. For example, as mentioned above, according to one or more examples, at least one memory may include or store instructions, the at least one memory and the instructions may be configured to, with at least one processor, cause the host device or host system to perform the one or more functions.

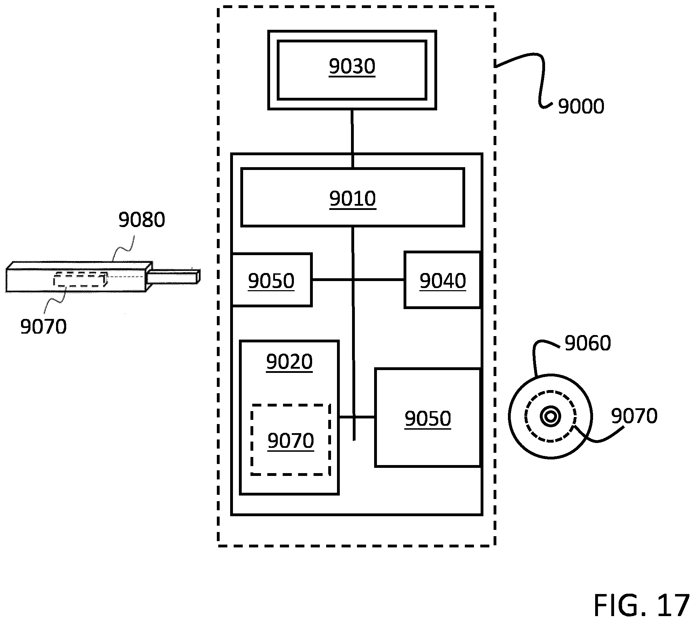

FIG. 17 illustrates an example embodiment of an apparatus 9000, as example host device or host system. The apparatus 9000 may be used for performing one or more or all steps of a method disclosed herein. The apparatus 9000 may be configured to perform one or more functions of an upsampling system disclosed herein.

The apparatus may be a general-purpose computer, a special purpose computer, a programmable processing apparatus, a machine, etc. The apparatus may be or include or be part of: a user equipment, client device, mobile phone, laptop, computer, network element, data server, network resource controller, network apparatus, router, gateway, network node, computer, cloud-based server, web server, application server, proxy server, etc.

As represented schematically, the apparatus 9000 may include at least one processor 9010 and at least one memory 9020. The apparatus 9000 may include one or more communication interfaces 9040 (e.g. network interfaces for access to a wired / wireless network, including Ethernet interface, WIFI interface, etc) connected to the processor and configured to communicate via wired / non wired communication link(s). The apparatus 9000 may include user interfaces 9030 (e.g. keyboard, mouse, display screen, etc) connected with the processor. The apparatus 9000 may further include one or more media drives 9050 for reading a computer-readable storage medium (e.g. digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may be or include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

The wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc.

The means may include at least one processor and at least one memory including at least one memory storing instructions that, when executed by the at least one processor, cause the apparatus to the considered function(s). In alternative or in combination, the means may include circuitry (e.g. processing circuitry) configured to perform the considered function(s).

As used in this application, the term "circuitry" may refer to one or more or all of the following:

(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

LIST OF MAIN ABBREVIATIONS

| | |
|---|---|
| AI | Artificial Intelligence |
| DDPM | Denoising Diffusion Probabilistic Model |
| DPI | Deep Packet Inspection |

| KL | Kullback-Leibler |
| MAE | Mean Absolute Error |
| Mbbp | megabits per seconds |
| ML | Machine Learning |
| MSE | Mean Squared Error |
| OLT | Optical Line Terminal |
| ONT | Optical Network Terminator |
| PON | Passive Optical Network |
| QoE | Quality of Experience |
| QoS | Quality of Service |
| VLB | Variational Lower Bound |
| WAN | Wide Area Network |
| XGS PON | Gigabit Symmetrical Passive Optical Network |

CITED REFERENCES

[01] J. Ho, A. Jain and P. Abbeel. "Denoising diffusion probabilistic models", 34th Conference on Neural Information Processing Systems (NeurIPS 2020), Vancouver, Canada; arXiv:2006.11239.
[02] A. Nichol and P. Dhariwal, "Improved denoising diffusion probabilistic models", 18 February 2021; ar-Xiv:2102.09672

**Claims**

1. A method comprising:
   upsampling a network traffic trace representing variations over time of a traffic-related counter based on:

   obtaining a first temporal sequence of input values of the traffic-related counter at an input rate, wherein the input values are in a first range;
   preprocessing the first temporal sequence of input values to generate a first sequence of scaled values at an output rate equal to the input rate multiplied by an upsampling factor K, wherein the scaled values are in a second range derived from the first range by a non-linear function;
   applying a trained iterative denoising process to the first sequence of scaled values stacked with a first noise signal at the output rate to generate a first sequence of denoised upsampled values at the output rate in the second range, wherein the first noise signal has values in the second range;
   postprocessing of the first sequence of denoised upsampled values to generate a first temporal sequence of output values in the first range at the output rate, wherein each input value in the first temporal sequence of input values is equal to a sum of K corresponding successive output values.

2. The method of claim 1, wherein preprocessing the first temporal sequence of input values comprises:

   upsampling the first temporal sequence of input values by generating, from each of the input values, K upsampled values to generate a first sequence of upsampled values such that the sum of the K upsampled values is equal to the considered input value;
   applying a scaling function to each of the upsampled values to generate the first sequence of scaled values in the second range.

3. The method of claim 2, wherein generating the K upsampled values comprises replacing each of the input values by K equal upsampled values, each computed by dividing the considered input value by K.

4. The method of any of the preceding claims, wherein the trained iterative denoising process is based on a denoising diffusion probabilistic model.

5. The method of any of the preceding claims, wherein the first sequence of scaled values is used as conditioning signal for the trained iterative denoising process.

6. The method of any of the preceding claims, wherein the trained iterative denoising process uses a U-net model iteratively executed.

7. The method according to any of the preceding claims, comprising training the iterative denoising process by:

obtaining a temporal sequence of input training values of the traffic-related counter at the second rate, wherein the input training values are in the first range;
obtaining a sequence of aggregated training values at the first rate in the first range, the aggregated training values corresponding to an aggregated version of the input training values;
scaling the input training values to generate a first sequence of scaled training values in the second range at the second rate;
preprocessing the sequence of aggregated training values to generate a second sequence of scaled training values in the second range at the second rate;
adding a noise signal in the second range to the first sequence of scaled training values to generate a sequence of noisy training values;
applying one iteration of the iterative denoising process to the sequence of noisy training values using the first sequence of scaled training values as target signal and the second sequence of scaled training values as conditioning signal to generate a sequence of output denoised values;
adapting one or more parameters of the iterative denoising process based on a loss function that evaluate a remaining noise in the sequence of output denoised values.

8. The method according to any of the preceding claims, wherein postprocessing of the first sequence of denoised upsampled values comprises:

scaling the first sequence of denoised upsampled values to generate a first sequence of scaled upsampled values in the first range;
generating the first temporal sequence of output values by adjusting values in the first sequence of scaled upsampled values such that each input value in the first temporal sequence of input values is equal to a sum of K corresponding successive output values.

9. The method of claim 8, wherein adjusting values in the first sequence of scaled upsampled values comprises applying a linear scaling factor to values in the first sequence of scaled upsampled values, wherein the linear scaling factor is computed based on the input value and the sum of K corresponding successive output values.

10. The method according to any of the preceding claims, comprising discarding the first P values and the last Q values from the first temporal sequence of output values or signaling that the first P values and the last Q values from the first temporal sequence of output values are less reliable.

11. The method according to any of the preceding claims, comprising:

obtaining a second temporal sequence of input values of the traffic-related counter at the input rate in the second range, wherein each of the first and second sequences concerns traffic via a respective communication channel over a same physical or logical transmission link;
preprocessing the second temporal sequence of input values to generate a second sequence of scaled values at the output rate, wherein the scaled values of the second sequence of scaled values are in the second range;
applying a trained iterative denoising process to the second sequence of scaled values and a second noise signal at the output rate to generate a second sequence of denoised upsampled values at the output rate in the second range, wherein the second noise signal has values in the second range, wherein the trained iterative denoising process is applied jointly to the first sequence of scaled values, the first noise signal, the second sequence of scaled values and the second noise signal;
postprocessing of the second sequence of denoised upsampled values to generate a second temporal sequence of output values in the first range at the output rate, wherein each input value in the second temporal sequence of input values is equal to a sum of K corresponding successive output values in the second temporal sequence of output values.

12. The method according to any of the preceding claims, comprising:
performing an operation on one or more network devices or network function based on one or more output values of the first temporal sequence of output values.

**13.** An apparatus comprising means for:
upsampling a network traffic trace representing variations over time of a traffic-related counter, based on:

obtaining a first temporal sequence of input values of the traffic-related counter at an input rate, wherein the input values are in a first range;
preprocessing the first temporal sequence of input values to generate a first sequence of scaled values at an output rate equal to the input rate multiplied by an upsampling factor K, wherein the scaled values are in a second range derived from the first range by a non-linear function;
applying a trained iterative denoising process to the first sequence of scaled values stacked with a first noise signal at the output rate to generate a first sequence of denoised upsampled values at the output rate in the second range, wherein the first noise signal has values in the second range;
postprocessing of the first sequence of denoised upsampled values to generate a first temporal sequence of output values in the first range at the output rate, wherein each input value in the first temporal sequence of input values is equal to a sum of K corresponding successive output values.

FIG. 1

FIG. 2

Input sample value: $A$

$$\sum p_i = 9$$

$$\sum y_i = A = 10$$

compensation factor: 1.1111

FIG. 3

FIG. 4

FIG. 5

EP 4 561 005 A1

Time [h] – 48 samples

FIG. 6A

Time [h] – 48 samples

FIG. 6B

EP 4 561 005 A1

Time [h] – 480 samples

FIG. 7A

Time [h] – 480 samples

FIG. 7B

FIG. 8A

Time [h] – 720 samples

FIG. 8B

Time [h] – 720 samples

FIG. 9

EP 4 561 005 A1

FIG. 10

1000 training steps:

$$q(x_t|x_{t-1})$$

$x_t$    $x_{t-1}$     $\forall\, t \in [1,1000]$

$$p_\theta(x_{t-1}|x_t)$$

10 sampling steps:

$x_K$   $x_{K-1}$   $x_{K-2}$   $x_2$   $x_1$   $x_0$

$p_\theta(x_{999}|x_{1000})$    $p_\theta(x_{888}|x_{889})$    $p_\theta(x_{111}|x_{112})$    $p_\theta(x_0|x_1)$

FIG. 11

EP 4 561 005 A1

FIG. 12

FIG. 13

US Linear scale - Mean traffic: 1.00 Mbps - MAE: 0.13 Mbps

DS Linear scale - Mean traffic: 7.33 Mbps - MAE: 1.69 Mbps

FIG. 14

EP 4 561 005 A1

US Linear scale - Mean traffic: 0.03 Mbps - MAE: 0.01 Mbps

DS Linear scale - Mean traffic: 0.59 Mbps - MAE: 0.12 Mbps

FIG. 15

obtaining a first input sequence of input values of a traffic-related counter at an input rate — 1610

preprocessing the first sequence of input values to generate a first sequence of scaled values at an output rate equal to the input rate multiplied by an upsampling factor K — 1620

applying a trained iterative denoising process to the first sequence of scaled values and a first noise signal at the output rate to generate a first sequence of denoised upsampled values at the output rate in the second dynamic range — 1630

postprocessing of the first sequence of denoised upsampled values to generate a first sequence of output values in the first dynamic range at the output rate — 1640

one or more operations may be performed on one or more network devices and / or network functions based on one or more output values of the output sequence — 1650

FIG. 16

FIG. 17

EP 4 561 005 A1

| | Europäisches Patentamt<br>European Patent Office<br>Office européen des brevets | **EUROPEAN SEARCH REPORT** | **Application Number**<br>EP 24 21 2367 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | DUPUIS NICOLAS ET AL: "Upsampling Aggregated Network Traffic Data with Denoising Diffusion Probabilistic Models", NOMS 2024-2024 IEEE NETWORK OPERATIONS AND MANAGEMENT SYMPOSIUM, IEEE, 6 May 2024 (2024-05-06), pages 1-6, XP034631478, DOI: 10.1109/NOMS59830.2024.10575606 [retrieved on 2024-07-02] * page 1, left-hand column, line 1 - page 5, right-hand column, last line; figures 2,3 * | 1-13 | INV.<br>H04L41/16<br>H04L43/04<br>G06N3/02<br>G06N20/00 |
| A | EP 4 221 131 A1 (LI MING [US] ET AL) 2 August 2023 (2023-08-02) * paragraph [0002] - paragraph [0089]; figures 1-11 * | 1-13 | |
| A | CHAOYUN ZHANG ET AL: "ZipNet-GAN: Inferring Fine-grained Mobile Traffic Patterns via a Generative Adversarial Neural Network", ARXIV.ORG, CORNELL UNIVERSITY LIBRARY, 201 OLIN LIBRARY CORNELL UNIVERSITY ITHACA, NY 14853, 7 November 2017 (2017-11-07), XP080835076, * page 1, left-hand column, line 1 - page 12, right-hand column, last line; figures 2,3,4,5 * | 1-13 | **TECHNICAL FIELDS SEARCHED (IPC)**<br><br>H04L<br>G06N |
| A | US 2023/067841 A1 (SAHARIA CHITWAN [CA] ET AL) 2 March 2023 (2023-03-02) * paragraph [0001] - paragraph [0175]; figures 1-19 * | 1-13 | |

-/--

The present search report has been drawn up for all claims

| Place of search | Date of completion of the search | Examiner |
|---|---|---|
| Munich | 17 March 2025 | Lupia, Sergio |

EPO FORM 1503 03.82 (P04C01)

page 1 of 2

**EUROPEAN SEARCH REPORT**

Application Number

EP 24 21 2367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHITWAN SAHARIA ET AL: "Image Super-Resolution via Iterative Refinement", ARXIV.ORG, CORNELL UNIVERSITY LIBRARY, 201 OLIN LIBRARY CORNELL UNIVERSITY ITHACA, NY 14853, 30 June 2021 (2021-06-30), XP081980663, * page 1, left-hand column, line 1 - page 13, line 17; figures 2, A.1 * ----- | 1-13 | |
| | | | **TECHNICAL FIELDS SEARCHED (IPC)** |

The present search report has been drawn up for all claims

| Place of search | Date of completion of the search | Examiner |
|---|---|---|
| Munich | 17 March 2025 | Lupia, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 2367

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2025

| Patent document cited in search report | | Publication date | Patent family member(s) | | Publication date |
|---|---|---|---|---|---|
| EP 4221131 | A1 | 02-08-2023 | CN | 113396562 A | 14-09-2021 |
| | | | CN | 116032781 A | 28-04-2023 |
| | | | EP | 3909203 A1 | 17-11-2021 |
| | | | EP | 4221131 A1 | 02-08-2023 |
| | | | US | 2021028969 A1 | 28-01-2021 |
| | | | US | 2023353440 A1 | 02-11-2023 |
| | | | WO | 2020173023 A1 | 03-09-2020 |
| US 2023067841 | A1 | 02-03-2023 | US | 2023067841 A1 | 02-03-2023 |
| | | | US | 2023153959 A1 | 18-05-2023 |
| | | | US | 2023385990 A1 | 30-11-2023 |
| | | | US | 2025061551 A1 | 20-02-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. HO** ; **A. JAIN** ; **P. ABBEEL**. Denoising diffusion probabilistic models. *34th Conference on Neural Information Processing Systems (NeurIPS 2020)*

- **A. NICHOL** ; **P. DHARIWAL**. Improved denoising diffusion probabilistic models. *arXiv:2102.09672*, 18 February 2021